Europäisches Patentamt

**European Patent Office**

Office européen des brevets

(19)

(11) Publication number: **0 039 197**

**A1**

(12)

# EUROPEAN PATENT APPLICATION

(21) Application number: **81301770.4**

(22) Date of filing: **22.04.81**

(51) Int. Cl.³: **B 01 D 13/00**
**B 01 D 3/00, C 02 F 1/04**

(30) Priority: **25.04.80 US 143724**
**17.03.81 US 244724**

(43) Date of publication of application:
**04.11.81 Bulletin 81/44**

(84) Designated Contracting States:
**AT DE FR NL**

(71) Applicant: **W.L. GORE & ASSOCIATES, INC.**
**555 Paper Mill Road**
**Newark Delaware 19711(US)**

(72) Inventor: **Gore, Wilbert Lee**
**487 Paper Mill Road**
**Newark Delaware(US)**

(72) Inventor: **Gore, Robert Walton**
**465 Poly Drummond Hill Road**
**Newark Delaware(US)**

(72) Inventor: **Gore, David Walton**
**1041 Ardrey Circle**
**Flagstaff Arizona(US)**

(74) Representative: **Taylor, Derek George et al,**
**Mathisen, Macara & Co. Lyon House Lyon Road**
**Harrow, Middx. HA1 2ET(GB)**

(54) Distillation apparatus.

(57) Apparatus and a process for the distillation of an aqueous feed liquid containing a salt or other low volatility solute, are provided in which the feed liquid in chamber (5) flows over one side of a porous, hydrophobic membrane (14), a driving force is maintained for evaporation of water from the feed to pass as vapour across the membrane (14), and to be condensed or collected in space (18) as distillate (D) on the other side of the membrane (14) while maintaining both liquid feed and liquid distillate in intimate contact with the membrane (14) on their respective sides thereof. A flow of liquid, in particular liquid feed, passes through chamber (4) as a coolant in heat-conductive relationship to the distillate (D) in space (18) and in counter-flow relationship to the liquid feed in chamber (5) flowing over the membrane (14). The microporous membrane (14) is made of a sufficiently non-wetting matrix material that both the liquid containing salt and the liquid distillate are repelled and prevented from entering the micropores. Efficient distillation of brackish water or brine to pure water is achieved. The preferred membrane is expanded, microporous polytetrafluoroethylene (PTFE).

FIG. 1.

EP 0 039 197 A1

Croydon Printing Company Ltd.

## DISTILLATION APPARATUS

This invention relates to an improved process and apparatus for the distillation of liquids containing a salt or other low volatility solute, and in particular for the distillation of sea water to produce fresh water.

Distillation is a process for vapourising a liquid and then condensing the vapour. It is useful in separating volatile portions of a mixture from nonvolatile or less volatile components.

One field of distillation which is of particular importance is that of obtaining pure water from brackish water or brine. For the purposes of this disclosure, the terms brackish water and brine are used to refer to an unsaturated salt solution including sea water.

It is known from US Patent Specification No:3,340,186 (Weyl) to provide apparatus for the distillation of a feed of aqueous liquid containing a salt or other low volatility solute in which the feed liquid flows in contact with a porous hydrophobic membrane such that water vapour is permitted to pass through the membrane and condenses to form a distillate on the opposite side of the membrane.

An object of the present invention is to provide an improved distillation apparatus and process.

According to the present invention there is provided apparatus for the distillation of a feed of an aqueous liquid containing a salt or other low volatility solute comprising a chamber provided with an inlet for the liquid feed and an outlet for discharging concentrated feed, a chamber for collecting distillate and having an outlet for the discharge of liquid distillate, said chambers being separated by a hydrophobic, microporous membrane, which membrane is in intimate contact with both said liquid feed and said distillate, and means for heating the liquid feed and cooling the distillate to provide a driving force for evaporation of water from said feed whereby distillation occurs across said microporous membrane by molecular diffusion of water vapour from said feed liquid, and wherein said microporous membrane comprises a sufficiently non-wetting matrix material such that both the feed liquid and the liquid distillate are repelled and prevented from entering the micropores of the membrane.

The present invention further provides apparatus for the distillation of a liquid feed containing a low volatility solute comprising first, second and third chambers, the first chamber adapted to receive and transport a first liquid containing a low volatility solute, the third chamber adapted to receive and transport, in the opposite direction to said first liquid, a second liquid at a lower temperature than said first liquid and containing said low volatility solute, the second chamber separating said first and third chambers, said second chamber providing a thermally conductive barrier between said second and said third chamber that is impermeable to liquid and vapour, said thermally conductive barrier cooperating with said third chamber to ensure intimate contact of said second liquid with said thermally conductive barrier, a second barrier between said first and second chambers that is impermeable to liquids but is permeable to vapour, said second barrier cooperating with said first chamber to ensure intimate contact of said first liquid with said second barrier and permitting the distillation by molecular diffusion from said first to said second chamber, and means through which distillate can be removed from said second chamber.

The preferred hydrophobic, microporous membrane is expanded, microporous polytetrafluoroethylene (PTFE).

The present invention further provides a process of distilling a feed liquid as defined in the claims appended hereto.

Apparatus embodying the invention and processes according to the invention will now be particularly described with reference to the accompanying drawings in which:-

Fig. 1 is a schematic drawing of a latent heat conserving still employing the principles of this invention.

Fig. 1A is a cross-sectional view of the still of Fig.1 taken along the line 1A-1A thereof.

Fig. 2 is a schematic drawing of a two-stage membrane still employing the principles of this invention and drawing feed liquid from two separate bodies of water which are at two different temperatures.

Fig. 3 is a schematic drawing of the apparatus used in Example 1 hereinbelow.

Fig. 4 is a schematic drawing of a two-stage membrane still employing the principles of this invention and wherein the latent heat of condensation in the first stage is used to partially preheat the feed in the second stage.

Figs. 5, 6 and 7 are schematics of further embodiments of the principles of this invention.

The process comprises feeding a liquid containing salt (or other low volatility solute) to one side of a porous, hydrophobic membrane, maintaining a driving force for evaporation of distillate from the feed across the membrane, and collecting the distillate on the other side of the membrane while maintaining both liquid feed and liquid distillate in intimate contact with the membrane on their respective sides thereof. By this process, distillation occurs across the microporous membrane by molecular diffusion of distillate vapour from the liquid containing salt. The microporous membrane is made of a sufficiently non-wetting matrix material such that both the liquid containing salt and the liquid distillate are repelled and prevented from entering the micropores. Efficient distillation of brackish water or brine to pure water is achieved. The preferred membrane material is expanded, microporous polytetrafluoroethylene (PTFE). Multiple stage distillation is also provided.

The critical component of all the inventive configurations described herein is the microporous, non-wetting membrane. The non-wetting characteristic is practically measured quantitatively as liquid entry pressure. Liquid entry pressure is the lowest pressure differential across the membrane which is required to force liquid into and through the membrane. For a membrane to be considered non-wetting, according to the principles herein, the liquid entry pressure must be a positive value; ie the liquid must not be absorbed into the membrane spontaneously. For the purposes of this invention, the liquid entry pressure must be high enough to prevent liquid from entering the pores of the membrane under normal operating conditions and preferably during accidental pressure increases.

Liquid entry pressure is a function of pore size of the microporous material, surface energy (or surface tension) of the liquid, and surface energy of the solid material comprising the matrix of the membrane. Smaller pores, higher liquid surface tensions, and lower solid surface energies all lead to higher liquid entry pressures. For simple microstructure geometries such as a membrane having pores which are straight and cylindrical, the liquid entry pressure can be calculated from a knowledge of the diameter of the largest pore and the surface energies of the liquid and the matrix. However, most microporous membranes have either irregularly shaped pores or an irregular, interconnecting pore space. For these microstructures a direct measurement of liquid entry pressure must be made. From a measurement of liquid entry pressure, a theoretical pore size can be expressed in terms of the diameter of a straight, cylindrical pore which would have the same liquid entry pressure. For the purposes of this invention, two liquid entry pressures are pertinent: the liquid entry pressure of the feed liquid and that of the distillate.

The porosity of the membrane is preferred to be high for two reasons. First, more porous membranes generally have a lower thermal conductivity because of the low conductivity of the gases filling the void spaces. It is desired that the thermal conductivity be low so that heat is retarded from being conducted across the membrane. Second, more highly porous membranes generally allow higher rates of diffusion of distillate vapours because of the higher diffusivities through gases as compared to solids. For this same reason, it is necessary that the microporous membrane be of the open-pore type rather than of a closed-cell type.

Although the thermal conductivity for highly porous materials is only fractionally affected by the thermal conductivity of the matrix material, it is still desirable that the matrix material have a low thermal conductivity.

The preferred material for the hydrophobic porous membrane of this invention is expanded, microporous PTFE. This material is commercially available from W L Gore & Associates Inc, Elkton, Maryland, USA. These membranes are available in widths up to 1.5 metres and in various porosities and thicknesses. Typical membranes are about 0.005 inches (.075mm) thick and have over 80% open-pore space. They are excellent thermal insulators and allow a high diffusional flow of water vapour, with rates of about 300 grams of water vapour per square metre per hour for each mm Hg water vapour pressure difference across them. These membranes are hydrophobic and can withstand over 25 psi water pressure without liquid water penetrating

0039197

through them. Therefore, they effectively prevent passage of salt water and liquid distillate but allow water vapour to flow through readily.

Another suitable porous membrane is microporous polypropylene, commercially available from Celanese Corporation under the trademark "Celgard".

In addition to high vapour permeability, three other properties of the membrane are believed to be necessary in combination. They are: low thermal conductivity; high water entry pressure; and thinness of membrane. Low thermal conductivity of the membrane reduces loss of heat by conduction so that the heat flux across the membrane is largely that which is carried by the latent heat of the distillate vapour in evaporating and condensing. High water entry pressure allows intimate contact of the distilling and distilled liquid with the membrane, making spacers and stagnant air layers unnecessary so that the diffusion path is short. For the same reason, ie shortening the diffusion path, thin membranes are desirable.

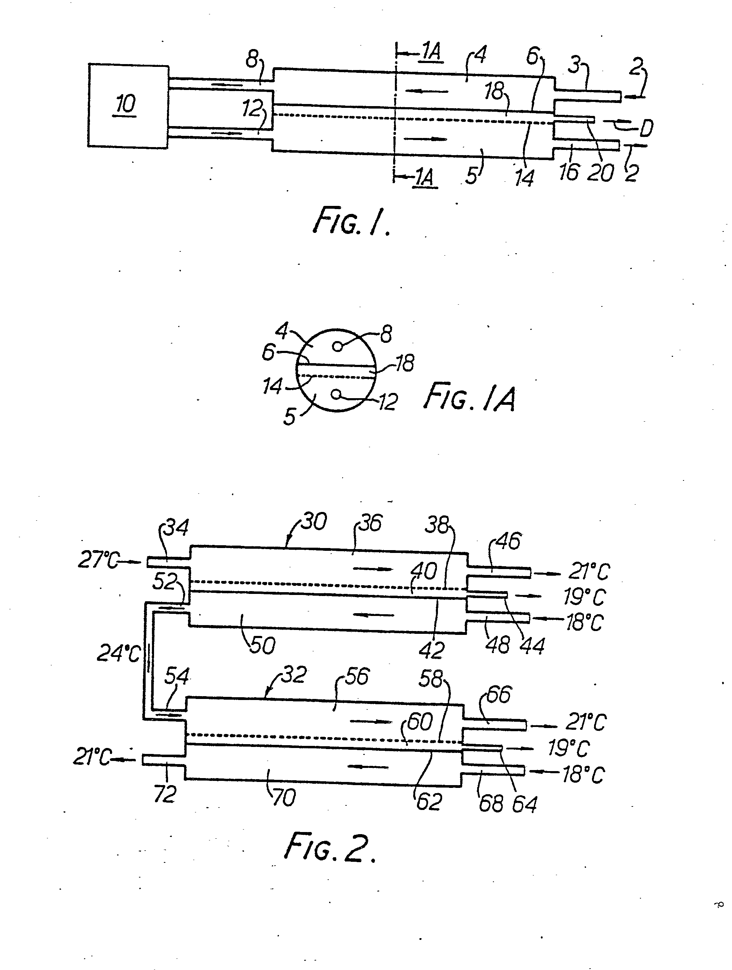

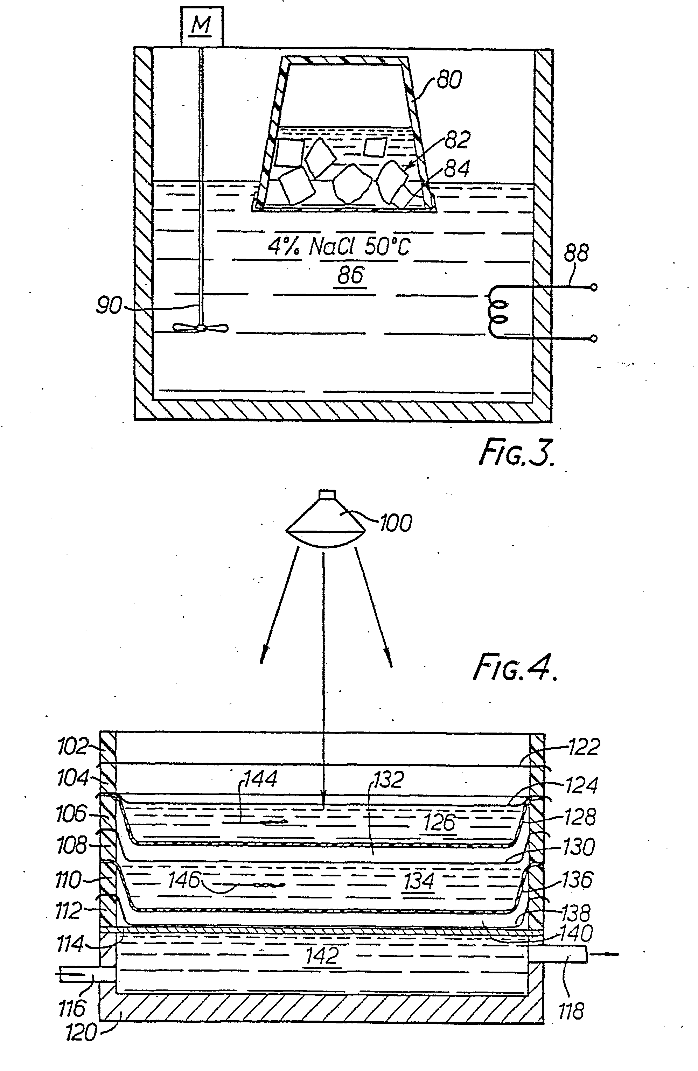

The invention also provides devices and processes for distillation where the latent heat of condensation can be efficiently used and re-used to volatilize additional brackish water. By suitable arrangement of counter-current flow of brine and rapid removal of pure water distillate, a continuous latent heat conserving distillation can be carried out with a single layer of a porous hydrophobic membrane coupled with a non-porous liquid-impermeable film. Fig. 1 is a schematic representation of such a device and process. Fresh cool brine 2 enters a chamber 4 through inlet 3 and flows along a thin polyethylene film 6 exiting at outlet 8, passes through a solar or other heater 10, then returns through inlet 12 to chamber 5 and flows in intimate contact with porous hydrophobic membrane 14, and finally the concentrated brine is discarded at outlet 16. Water vapour flows from the hot brine adjacent the porous

hydrophobic film through this film and condenses against the cool polyethylene film 6 so that pure water is collected in the space 18 between the polyethylene film and the hydrophobic membrane. The pure water is withdrawn at orifice 20. This distillate collector is continuously drained to keep the distillate layer as thin as possible so that the latent heat of condensation is readily transferred to the brine in contact with the polyethylene film. Such drainage may be facilitated by maintaining the brine pressures at higher levels than that in the distillate receptacle 18.

Fig. 1A is a schematic diagram of the cross-section of the still shown in Fig. 1 taken along the lines 1A-1A thereof. While cross-sectional configuration is not critical to the invention, Fig. 1A showing a circular still cross-section is provided for completeness. Therein, brine passes through chamber 4 in contact with nonporous film 6 and enters outlet 8 passing through the heater and entering inlet 12 into chamber 5 flowing in contact with microporous membrane 14. Distillate collects in and is withdrawn from space 18 between thme nonporous film and the microporous membrane.

In a completely insulated device, heat is lost primarily in the distillate and in the concentrated brine being withdrawn from the system. The replacement for this heat loss is supplied by the solar or other heater 10.

The single microporous layer operates as a continous latent heat conserving still. At entrance 12 of the hot brine, the incoming brine has been heated by transfer of sensible heat and latent heat of condensation through the polyethylene separator film. Due to the heater 10, there is a temperature difference and therefore a substantial water vapour pressure difference across membrane 14 so that vapour flows through the porous membrane 14 and condenses in receptacle 18. As the hot brine flows toward exit 16, it cools by evaporation and conduction through the porous film, but the incoming brine

0039197

adjacent to it in chamber 4 entering at inlet 3 is always cooler so that the distillation process continues. Such membrane 14 is thin and very permeable to water vapour, a substantial flow of water vapour occurs even with small temperature differences and therefore small water vapour pressure differences.

Heat input to maintain temperature differences across the membrane can be by solar radiation, combustion of fossil fuels, heat exchange with process cooling water, nuclear energy, or any other conceivable heat energy source.

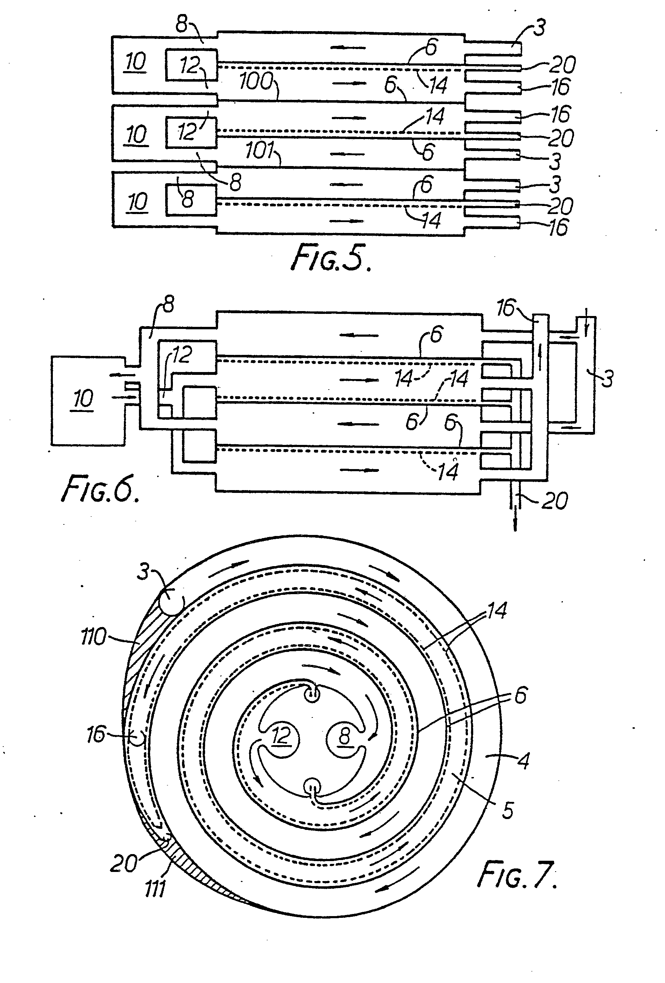

A two-effect embodiment of this invention which advantageously employs the difference in temperature of two separate masses of salt water, one at 27°C and one at 18°C, to produce fresh water is shown in Fig. 2. The particular temperatures referred to are illustrative only. Warm brine at 27°C enters the upper stage 30 at inlet 34, passing through chamber 36. Water vapour evaporates downward (in this illustration) through porous hydrophobic membrane 38 and condenses in the space 40 formed by the membrane 38 and a polyethylene film 42. Distillate flows out through an outlet 44. By the time the salt water reaches the outlet 46, it is somewhat more concentrated and has cooled to about 21°C. This spent brine is drained away and discarded. The temperature differential across the membrane is maintained by a counter-current flow of brine from the second source which enters at inlet 48 at a temperature of 18°C and passes through chamber 50 of upper stage 30. By the time it reaches outlet 52, it has warmed to about 24°C. This 24°C salt water passes through inlet 54 into stage 32 similar to the one above it. From chamber 56, water vapour passes through porous hydrophobic membrane 58, condenses in space 60 formed by the membrane 58 and the polyethylene film 62, and is drained out at outlet 64. The concentrated and cooled brine passes out through outlet 66 at a temperature of 21°C and is discarded. The counter-current flow of cooling brine enters at inlet 68, passes through chamber 70, and is drained off through outlet 72 at a temperature of 21°C.

This embodiment of the invention may be utilized to produce fresh water by use of oceanic thermal gradients or gradients between sea water and nearby salt water ponds which are heated by solar energy. If such ponds are covered by an evaporation-retarding layer of oil, they can become significantly warmer than sea water.

The number of stages practical varies from one to many, depending on the difference in temperatures of the two masses of salt water.

Cross-sectional configuration in Fig. 2 is again not critical and a separate figure showing cross-section has been omitted for brevity.

### Example 1

Apparatus for carrying out this example is illustrated schematically in Fig. 3. Therein plastic cup 80 was partially filled with an ice/water mixture 82, and a .001 inch thick microporous PTFE membrane 84 having approximately 80% open-pore space, supplied by W L Gore & Associates Inc, under the trademark GORE-TEX, was heat-sealed to the lip of the cup. The cup was weighed then inverted into a 4% sodium chloride in water solution 86 which was maintained at 50°C by means of an electrical resistance heater 88 and which was circulated by stirrer 90 so as to make temperatures within the solution as uniform as possible. After a few minutes of contact between the microporous membrane and the salt solution, the cup was re-weighed. The following values were obtained:-

0039197

|  | Trial I | Trial II |
|---|---|---|
| Area of membrane | 33.2 cm$^2$ | 33.2 cm$^2$ |
| Time of exposure | 3 minutes | 2 minutes |
| Weight before | 84.35 grams | 81.84 grams |
| Weight after | 87.37 grams | 84.28 grams |
| Weight gain | 3.02 grams | 2.44 grams |
| Rate of Distillation | 437,000 grams/ m$^2$ day | 529,000 grams/ m$^2$ day |

The water/ice mixtures 82 were tested following each trial for chloride ion by adding silver nitrate solution. The distillate in each case was pure and uncontaminated.

This example is illustrative of the extremely high rates of distillation which are possible when both the heated salt water and the cool distillate are in direct contact with the hydrophobic porous film.

### Example 2

The utilization of a multiple stage still configuration to utilize the latent heat of condensation was tested by means of the two-stage circular membrane still, 5 1/2" in diameter, depicted in Fig. 4. The still is a circular cylindrical assembly of spacing and clamping rings mounted upon a base to effect desired spacing and clamping of the needed membranes. Each such ring had a 5 1/2" I.D. In the still, aluminium ring 102 having a height of 3/8 inch was mounted upon plastic ring 104 having a height of 3/8 inch, in turn mounted upon plastic rings 106 through 112, each having heights of 3/16 inch, the assembly resting on base plate 114. Cold tap water at a temperature of about 15°C was passed below and in contact with base plate 114 at a rate of 570 ml/min, entering through inlet 116 and exiting through outlet 118 of base 120. Radiation from a 275 watt sunlamp 100 passed downward as shown through 1 mil thick fluorinated ethylene propylene (FEP) glazing 122, and 1 mil thick FEP vapour barrier 124, and a brine layer 126 approximately 3/8"
thick of 3.3% salinity. Beneath this brine and 14 cm
below the sunlamp, a 44 mil thick GORE-TEX microporous
PTFE membrane dyed black 128 absorbed the radiation and
became heated, thereby heating the brine above it. Water
vapour from the brine 126 evaporated downward through the
GORE-TEX membrane 128 and condensed against cooler FEP
film 130, collecting in the pocket 132. Heat from this
condensation, as well as some conducted heat, passed
through the FEP film 130 and into the brine layer of the
second stage 134, also approximately 3/8" thick and of
3.3% salinity. Water vapour from this brine layer 134
then, diffused downward through a 44 mil thick GORE-TEX
microporous PTFE membrane of the second stage 136 as shown
and condensed against lowest FEP film 138, collecting in
the space 140. Cold tap water at about 15°C was passed
through the cavity 142 at a rate of 570 ml/min to
facilitate the flow of heat through the still.

After two hours, the temperatures of the upper brine
layer 126 was measured using thermocouple 144 to be 53°C,
and the lower brine layer 134 had achieved a temperature
of 37°C, measured by thermocouple 146. The still was
disassembled and 47 ml of distillate was recovered from
the upper distillate pocket 132 and 30 ml from the lower
distillate pocket 140. The distillate when boiled off
left no measurable residue, and was thus not contaminated
by the salt.

A separate measurement was made of the initial rate
of temperature increase in the upper brine layer. From
the known mass of brine, it was concluded that heat is
absorbed under the above conditions by the upper brine
layer at a rate of 18 Kcal per hour. If efficiency is
defined as the ratio of energy used to evaporate water to
the energy absorbed by the system, then:

$$\text{Efficiency} = \frac{77 \text{ ml} \times .54 \text{ Kcal/ml}}{18 \text{ Kcal/hr} \times 2\text{hr}} \times 100\% - 116\%$$

where the heat of volatilation and condensation is taken as .54 Kcal/ml. Only a still which makes use of the latent heat of condensation can achieve efficiencies greater than 100%.

Many improvements could be made on this design. The number of stages could be increased by using thinner porous membranes and by decreasing the thickness of the brine layers, so that the temperature drop per stage would be decreased. The distillate could be drained off as it is produced, and the brine made to flow in order to prevent excessive salt concentration. Floating embodiments of this invention, whether of single or multiple stages, could utilize the cooling effect of the sea or of sea water ponds to fill the function of the heat sink 142. A single-stage membrane still of this type would have application for survival at sea.

One such improvement is now described. One requirement of an economically useful desalination device is that it produce a reasonable amount of water per unit area of working surface. For membrane distillation, this can be quantified as the volume of fresh water produced per unit area of membrane per unit time for a given difference in vapour pressure across the membrane. We call this quantity the "C factor" expressed in gallons of water per day per square foot per torr vapour pressure difference. The productivity per square foot is then expressed as the C factor multiplied by the vapour pressure driving force across the membrane. This driving force is calculated from the bulk fluid temperatures on either side of the membrane and the salinity of the salt water on the warm side. Since only the bulk fluid temperatures are readily measurable and are not identical to the temperatures at the membrane/fluid interfaces, the C factor will vary for different devices and for different conditions even though the type of membrane used may be the same.

Previous membrane distillation patents have claimed multi-stage "sandwich" configurations as the most effective design. These devices, however, are not highly productive and achieve only low C factors. This is largely due to the poor mixing of the liquids within chambers in such devices, which leads to thermal stratification. For instance, the C factor of the examples of US Patent No: 3,340,186 are only about .005 gallons per square foot per day per torr of water vapour pressure difference across the membrane. We shall see below that much higher C factors are possible with the devices of this invention.

A second requirement for usefulness where the cost of heat energy is high is that a small amount of heat generates a large amount of fresh water. This is commonly expressed as the "performance ratio" of the device. The performance ratio of a device is the amount of heat required to evaporate a unit quantity of water divided by the amount required to produce a unit quantity of water with the device. For example, the heat of vapourisation of water is about 565 calories per gram at 55°C. A device that re-uses this heat might have a performance ratio of 20, thus requiring only about 28 calories of heat input per gram of distillate produced. All distillation devices are limited in achieving high performance ratios by the available difference in temperature of the heat source and heat sink. In membrane distillation designs using stacked configurations, the performance ratio is a function of the number of stages which can be interposed between the heat source and heat sink. The poor mixing of salt water in such designs leads to a large temperature drop across each stage. Since the number of stages possible is the available temperature difference divided by the average temperature drop across each stage, it follows that the performace ratio achievable with the stacked configuration cannot be high.

High performance ratios can be achieved by the design depicted in Fig. 1. Here the performance ratio is also dependent upon the temperature difference between the hot brine entering the still at 12 and the cold brine entering at 3. However, the temperature difference across the membrane can be as small as 2°C without causing productivity to drop to an uneconomical level. It is this small temperature difference across the membrane that accounts for the high performance ratios achieved with the design show in Fig. 1. The salt water in channels 4 and 5 flows relatively quickly in counter-current directions and is well mixed within each channel. The good mixing and counter-current flow, together with the rapid removal of distillate from the space between the membrane 14 and impermeable sheet 16, make this small temperature drop across the membrane operationally feasible.

It is important that a still of the design depicted in Fig. 1 be well insulated. One way to decrease the need for insulation would be to run a number of stills in parallel so that they share external walls. Figure 5 shows how this might be done with three stills. Numeration is the same as in Fig. 1. The walls 100 and 101 in Fig. 5 can be eliminated, which leads to the embodiment depicted in Fig. 6.

Another way to minimize the need for insulation, increase the packing density of the membrane, and contain the pressure necessary to provide high flow necessary for good mixing is to create a three-chambered spiral as shown in Fig. 7. Here again the numeration is the same as in Fig. 1. Since the cold salt water enters at the outside, there is no need for insulation around the perimeter.

A still of this design was built using .008" half-hard aluminium as the impermeable material 6. The salt water flow channels 4 and 5 were maintained at a thickness of 1/8" by use of 1/8" plastic tubing spacers, and were about 24 feet long. The assembled still was 12" in diameter and 6" high. The top and bottom were potted with epoxy sealant, and urethane foam sealed behind the outer headers 3, 16 and 20 at 110 and 111.

Four percent sodium chloride solution at a temperature of 48.4°C flowed in 3 at a rate of two gallons per minute, spiralled into the center, and exited at 8 at a temperature of 56.5°C. This water was heated externally by a resistance heater to 59.7°C and pumped into 12, whence it spiralled outward through channel 5. A portion of it evaporated, the distillate condensing and collecting between the membranes 14 and the aluminium sheets 6 and draining out at 20, aided by a 16" Hg vacuum applied at 20. In five minutes, 400 millilitres (.10567 gallon) of distillate were produced, containing .02% (200 ppm) sodium chloride as determined by evaporation. (This indicated a small leakage around the seals). The portion of the salt water which did not evaporate exited at 16 at a temperature of 50.6°C.

Since the still contained 18.1 square feet of membrane and the average vapour pressure difference across the membrane weas about 12 mm Hg, the average C factor was 0.137 gallons per $ft^2$ per day per torr. This is 27 times the C factor achieved in US Patent 3,340,186. The performance ratio was 1.85. Since the rise in temperature from 3 to 8 was 56.5 - 48.4 = 8.1°C, we can expect that had the still been longer and the brine heated so that the rise were 70°C, the performance ratio would have been approximately (70°C/8.1°C) x 1.85 = 16. This is better energy efficiency than that achieved by any current commercial distillation process.

While the invention has been described in detail in connection with certain examples, features and preferred embodiments, the foregoing is deemed to be illustrative only of the principles of the invention. Since modifications and changes will readily occur to those skilled in the art, the invention is not to be considered as limited to the exact construction and operation shown and described, and accordingly all suitable modifications and equivalents may be resorted to which fall within the scope of the invention as claimed.

## CLAIMS

1. Apparatus for the distillation of a feed of an aqueous liquid containing a salt or other low volatility solute characterised by a first chamber provided with an inlet for the liquid feed and an outlet for discharging concentrated feed, a second chamber for collecting distillate and having an outlet for the discharge of liquid distillate, said chambers being separated by a hydrophobic, microporous membrane, which membrane is in intimate contact with both said liquid feed and said distillate, and means for heating the liquid feed and cooling the distillate to provide a driving force for evaporation of water from said feed whereby distillation occurs across said microporous membrane by molecular diffusion of water vapour from said feed liquid, and wherein said microporous membrane comprises a sufficiently non-wetting matrix material such that both the feed liquid and the liquid distillate are repelled and prevented from entering the micropores of the membrane.

2. Apparatus according to Claim 1 characterised in that the means for heating the liquid feed and cooling the distillate comprise a third chamber for containing liquid and having a common wall with the chamber for containing distillate, said wall being spaced from said membrane and being impervious to liquid and vapour but capable of conducting heat away from the distillate, the third chamber having an inlet and an outlet arranged to conduct liquid flow through said further chamber in a counter-flow direction to the flow of liquid feed over the membrane.

3. Apparatus according to Claim 2 characterised in that the inlet of said third chamber is arranged to receive a supply of said liquid feed, said outlet of the third chamber being connected to the inlet of said first chamber.

4.  Apparatus according to Claim 3, characterised in that the means for heating the liquid feed comprise a heater or heat exchanger located at the inlet to the first chamber or located in a flow path between the outlet of the third chamber and the inlet of the first chamber.

5.  Apparatus according to any preceding claim characterised in that said membrane is expanded, microporous polytetrafluoroethylene.

6.  Apparatus according to any one of Claims 1 to 4 characterised in that said membrane is microporous polypropylene.

7.  Apparatus according to any preceding claim which forms the first stage of a multistage distillation apparatus, characterised by at least one further stage constructed in accordance with the first stage.

8.  A process for distilling a feed liquid containing a salt or other low volatility solute, characterised by the steps of feeding feed liquid to one side of a hydrophobic, microporous membrane, disposing a liquid and vapour impervious heat-conductive barrier in spaced relationship to the second side of said membrane, and causing a fluid at a lower local temperature than the feed liquid flowing over the membrane, to flow in contact with the side of said barrier remote from said membrane, to provide a driving force for evaporation of distillate from said feed across said membrane, collecting said distillate on the second side of said membrane while maintaining both feed liquid and distillate liquid in intimate contact with said membrane on their respective sides thereof, whereby distillation occurs across said microporous membrane by molecular diffusion of distillate vapour from said feed liquid and wherein said microporous membrane comprises a sufficiently non-wetting matrix material such that both the feed liquid and the liquid distillate are repelled and prevented from entering the micropores of the membrane.

9. A process according to Claim 8 characterised in that the feed is brine or brackish water.

10. A process according to Claim 8 or Claim 9 characterised in that said membrane is expanded, microporous polytetrafluoroethylene or microporous polypropylene.

11. A process according to any one of Claims 8 to 10 characterised in that said fluid is feed liquid flowing in counter-flow relation to and at a lower local temperature than the feed liquid which contacts the membrane.

821:2SAH2

FIG. 1.

FIG. 1A

FIG. 2.

4% NaCl 50°C
86

Fig.3.

Fig.4.

0039197

FIG.5.

FIG.6.

FIG.7.

| | European Patent Office | EUROPEAN SEARCH REPORT | **0039197** |
|---|---|---|---|
| | | | Application number |
| | | | EP 81 30 1770 |

| Category | Citation of document with indication, where appropriate, of relevant passages | Relevant to claim | CLASSIFICATION OF THE APPLICATION (Int. Cl.¹) |
|---|---|---|---|
| X | FR - A - 1 472 093 (PACTIDE CORP.)<br><br>* Abstract; figures 1-8; page 2, column 1, lines 3-6; page 3, column 1, line 32 - page 4, column 1, line 39; page 4, column 2, line 27 - page 7, column 2, line 26; page 8, column 2, line 40 - page 9, column 2, line 53 *<br><br>& GB - A - 1 096 677<br>& GB - A - 1 096 680 | 1,2,5, 7-10 | B 01 D 13/00<br> 3/00<br>C 02 F 1/04 |
| DX | US - A - 3 340 186 (P.K.WEYL)<br><br>* Complete document * | 1-3, 5-11 | **TECHNICAL FIELDS SEARCHED (Int. Cl.³)**<br><br>B 01 D 13/00<br> 3/00<br>C 02 F 1/00<br> 1/04 |
| | FR - A - 1 562 291 (Y. HENDERYCKX)<br><br>* Complete document *<br><br>& US - A - 3 563 860 | 1-4, 7-9, 11 | |

**DOCUMENTS CONSIDERED TO BE RELEVANT**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 06-08-1981 | HOORNAERT |

EPO Form 1503.1  06.78